# EUROPÄISCHE PATENTSCHRIFT

(11) **EP 3 610 956 B1**
(45) Veröffentlichungstag und Bekanntmachung des Hinweises auf die Patenterteilung: **22.06.2022**
(21) Anmeldenummer: 18188890.0
(22) Anmeldetag: 14.08.2018
(51) Int. Cl.: B05B 14/43, B01D 46/00

(54) **LACKIERANLAGE UND VERFAHREN ZUM LACKIEREN EINES WERKSTÜCKS**
PAINTING INSTALLATION AND METHOD FOR PAINTING A WORKPIECE
INSTALLATION DE PEINTURE ET PROCÉDÉ DE PEINTURE D'UNE PIÈCE À USINER

(43) Veröffentlichungstag der Anmeldung: 19.02.2020
(73) Patentinhaber: Sturm Maschinen- & Anlagenbau GmbH, 94330 Salching (DE)
(72) Erfinder: BINDER, Dietmar, 71088 Holzgerlingen (DE)
(74) Vertreter: Wunderlich & Heim Patentanwälte Partnerschaftsgesellschaft mbB

(56) Entgegenhaltungen:
- EP-A1- 3 219 396
- EP-A1- 3 219 398
- WO-A1-2017/037643
- DE-U1-202014 103 177

## Beschreibung

Die Erfindung betrifft eine Lackieranlage zum Lackieren eines Werkstücks mit einer Lackierstation, in welcher mittels mindestens einer Lackiervorrichtung eine Beschichtung auf das Werkstück aufbringbar ist, und einer Absaugstation, welche unterhalb der Lackierstation angeordnet ist, und eine Absaugeinrichtung mit mindestens einem Filterelement aufweist, über welche Luft mit Overspray aus der Lackierstation ansaugbar ist, wobei Overspray aus der angesaugten Luft an dem mindestens einem Filterelement abgeschieden wird, gemäß dem Oberbegriff des Anspruchs 1.

Des Weiteren betrifft die Erfindung ein Verfahren zum Lackieren eines Werkstücks, wobei in einer Lackierstation mittels mindestens einer Lackiervorrichtung eine Beschichtung auf das Werkstück aufgesprüht wird und in einer Absaugstation, welche unterhalb der Lackierstation angeordnet ist, mit mindestens einem Filterelement Luft mit Overspray aus der Lackierstation angesaugt wird, wobei Overspray aus der angesaugten Luft an dem mindestens einem Filterelement abgeschieden wird, gemäß dem Oberbegriff des Anspruchs 10.

Ein gattungsbildender Stand der Technik ist aus der EP 3 219 396 A1 und der EP 3 219 398 A1 der Anmelderin bekannt. Diese bekannte Anlage ist in Zusammenhang mit den Figuren 1 bis 8 gezeigt und beschrieben.

Ein weiterer Stand der Technik geht aus der DE 10 2011 108 631 A1 hervor. Bei diesem bekannten Verfahren und der bekannten Vorrichtung wird aus einer obenliegenden Lackierstation Luft mit Overspray über eine Absaugeinrichtung nach unten abgesaugt. Dabei ist in einem oberen Bereich der Absaugstation eine Ansaugöffnung vorgesehen. Über diese wird die angesaugte Luft von oben in ein kastenförmiges Filterelement eingeleitet. Die gefilterte Luft wird anschließend an einer Rückseite des kastenförmigen Filterelementes ausgeleitet. Zum Wechseln ist ein Transportelement vorgesehen.

Aus der DE 102 09 499 A1 geht eine Anlage zum Beschichten von Gegenständen mit Pulver hervor. Bei dieser Pulverbeschichtungsanlage sind in einem unteren Bereich Filtereinheiten verfahrbar entlang von Schienen aufgehängt. Die Filtereinheiten weisen einen trommelförmigen oder quaderförmigen Abschnitt und einen darunter angeordneten trichterförmigen Abschnitt auf. Der trichterförmige Abschnitt dient zum Ansammeln abgeschiedener Pulverpartikel, welche über Leitungen zur Wiederverwendung abgeführt werden können.

Aus der DE 201 05 239 U1 geht ein Abscheidesystem für Farbpartikel in der Abluft von Lackierkabinen hervor. Zur Abscheidung von Luft sind seitlich angeordnete, auswechselbare Filterkassetten vorgesehen.

Ein Filter zum Filtern von Sprühnebeln ist aus der DE 10 2009 034 863 A1 bekannt. Der Filter weist als zur Filterung wirksames Medium ein Papiergelege auf, wobei aus dem Papiergelege Filtertaschen gebildet sind. Die Filtertaschen sind modulartig zusammengefasst.

Bei der sogenannten Trockenabscheidung von Overspray aus Lackieranlagen ist es angestrebt, möglichst viel Overspray an den wechselbaren Filterelementen abzuscheiden. Schlägt sich Overspray an den Wänden der Anlage ab, so bildet sich eine zähe, klebrige Lackschicht, welche in regelmäßigen Abständen in aufwändiger Weise zu entfernen ist. Die Filterelemente setzen sich allmählich mit Lack zu und sind teilweise mehrmals täglich zu wechseln. Die regelmäßige Wartung dieser Lackieranlagen ist mit einem großen Zeit- und Arbeitsaufwand verbunden und reduziert die Nutzungszeit der Gesamtanlage.

Eine weitere Anlage und ein weiteres Verfahren gehen aus der DE 10 2013 011 107 A1 und der DE 20 2014 103 177 U1 hervor. Eine untere Absaugstation weist dabei seitliche Austrittsöffnungen auf, an welche seitlich Filterelemente angesetzt sind. Durch die mehrfache Umlenkung der Luft können sich strömungsbedingt Toträume bilden, in welchen sich Lackpartikel absetzen. Dies erhöht den Reinigungsaufwand.

Der Erfindung liegt die **Aufgabe** zugrunde, eine Lackieranlage und ein Verfahren zum Lackieren anzugeben, welche einen besonders wirtschaftlichen Betrieb beim Lackieren ermöglichen.

Die Aufgabe wird durch eine Lackieranlage mit den Merkmalen des Anspruchs 1 beziehungsweise durch ein Verfahren mit den Merkmalen des Anspruchs 10 gelöst. Bevorzugte Ausführungsformen der Erfindung sind in den jeweils abhängigen Ansprüchen angegeben.

Bei der erfindungsgemäßen Lackieranlage ist vorgesehen, dass in einem unteren Bereich der Absaugstation eine nach oben gerichtete Ansaugöffnung zum Abführen von Luft angeordnet ist, dass das Filterelement eine nach unten gerichtete Austrittsöffnung aufweist, welche auf die Ansaugöffnung aufgesetzt ist, und dass das mindestens eine Filterelement in einem Mittenbereich der Absaugstation angeordnet ist, wobei Luft mit Overspray über den Umfang des Filterelementes ansaugbar ist.

Ein Grundgedanke der Erfindung kann darin gesehen werden, in einem unteren Bereich der Absaugstation, insbesondere am Boden der Absaugstation eine nach oben gerichtete Ansaugöffnung vorzusehen. Auf dieser nach oben gerichteten Ansaugöffnung wird das Filterelement oben auf die Ansaugöffnung aufgesetzt. Damit kann nahezu der gesamte obere Teil des Filterelementes und somit der größte Teil des Außenumfangs des Filterelementes als eine Filterfläche vorgesehen werden. Dies erlaubt ein sehr gutes Ansaugen von Luft von oben und von der Seite über praktisch den gesamten Umfang in einem Ansaugraum. Des Weiteren ist nach der Erfindung das Filterelement in einfacher Weise auf die Ansaugöffnung abgesetzt. Die Anordnung des Filterelementes in einer Schwerkraftrichtung vereinfacht die Befestigung. Vorzugsweise langt das Aufsetzen des Filterelementes, ohne dass zusätzliche Befestigungselemente benötigt werden müssten.

Ein weiterer Aspekt der Erfindung besteht darin, das mindestens eine Filterelement in einen Mittenbereich der Absaugstation frei anzuordnen, so dass es umseitig von Abluft mit Overspray umströmt und diese Ablauft angesaugt werden kann. Im Gegensatz zu einem Filterelement, welches an einer Wandseite angeordnet ist, wird so ein größerer Teil der Oberfläche des Filterelementes zum Ansaugen genutzt. Durch die Anordnung des Filterelementes oder der Filterelemente in einem Mittenbereich erfolgt die Strömung von oben und ist von den seitlichen Wandflächen der Absaugstation entfernt. Dies reduziert ein Anlagern von Overspray an den seitlichen Wandflächen der Absaugstation und vermindert so auch einen notwendigen Wartungs- und Reinigungsaufwand.

Insgesamt kann so ein besonders einfaches und schnelles Wechseln des Filterelementes erreicht werden. Da zum Wechseln eines Filterelementes üblicherweise der Lackierbetrieb unterbrochen werden muss, führt eine Reduzierung der Filterwechselzeit zu einer Erhöhung des Nutzungsgrades der Lackieranlage.

Nach der Erfindung ist es vorgesehen, dass eine Wechseleinrichtung mit mindestens einem Transportwagen vorgesehen ist, mit welchem das Filterelement auf der Ansaugöffnung absetzbar und wieder abführbar ist. Ein Anschlag kann aus einem oder mehreren Bolzen oder Plattenelementen bestehen. Vorzugsweise ist der Anschlag als ein ringsegmentförmiges Teil, insbesondere ein halbkreisförmiges Teil, ausgebildet, welches passend zu einem Außenumfang eines ringförmigen Zentrierstutzens an der Ansaugöffnung ausgebildet ist. Das Transportelement mit einem neu einzusetzenden Filterelement kann so sehr schnell und positionsgenau an die Ansaugöffnung angefahren werden. Es ist so ein schnelles zentriertes Absetzen des Filterelementes auf der Ansaugöffnung möglich.

Eine weitere bevorzugte Ausführungsform der Erfindung besteht darin, dass das Transportelement eine Hubeinrichtung aufweist, mittels welcher das Filterelement vertikal auf die Ansaugöffnung absenkbar und aufsetzbar sowie von der Ansaugöffnung anhebbar ist. So kann der Transportwagen zum Entfernen eines Filterelementes in einem vertikal eingefahrenen Zustand in die Absaugstation unter das Filterelement bewegt werden. Durch ein nach oben Fahren der Hubeinrichtung kann das Filterelement von der Ansaugöffnung angehoben und vertikal beabstandet werden. In diesem oben liegenden Transportzustand kann dann das Filterelement mit dem Transportelement in effizienter Weise aus der Absaugstation ausgefahren werden. In umgekehrter Weise kann dann ein neues Filterelement mit dem vertikal ausgefahrenen Transportelement wieder in die Absaugstation eingefahren werden. Nach Erreichen einer zentrischen Absenkposition wird die Hubeinrichtung wieder eingefahren, wobei das Filterelement auf der Ansaugöffnung zentriert abgesetzt wird.

Entsprechend ist es nach einer erfindungsgemäßen Ausführungsvariante vorgesehen, dass das Filterelement von einer Filterposition an der Ansaugöffnung mittels der Hubeinrichtung des Transportelementes in eine oben liegende Transportposition anhebbar und aus der Absaugstation abführbar ist.

Eine Zentrierung wird nach einer Weiterbildung der Erfindung noch dadurch verbessert, dass an der Ansaugöffnung ein Zentrierstutzen vorgesehen ist, auf welchem ein nach unten gerichteter Aufsatzstutzen an dem Filterelement aufsetzbar ist. Zentrierstutzen und Aufsatzstutzen sind dabei korrespondierend zueinander ausgebildet und können eine leicht konische Form aufweisen. Vorzugsweise ist der Aufsatzstutzendurchmesser größer als der Zentrierstutzen, so dass der Aufsatzstutzen den Zentrierstutzen umgibt. In der aufgesetzten Filterposition können Zentrierstutzen und Aufsatzstutzen eine leichte Presspassung bilden, so dass eine zuverlässige Befestigung erreicht ist. Im Übrigen wird die Fixierung des Filterelementes im Betrieb durch einen im Filterelement herrschenden Unterdruck unterstützt. Vorzugsweise können an dem Zentrierstutzen und dem Aufsatzstutzen radial gerichtete, vorzugsweise leicht angewinkelte Flansche oder Kragen angeordnet sein, um eine Zentrier- und/oder Dichtfunktion zu verbessern.

Ein schnelles und zuverlässiges Wechseln des Filterelementes wird gemäß einer Weiterbildung der Erfindung noch dadurch unterstützt, dass das Filterelement einen Boden aufweist, der beim Transportieren des Filterelementes auf dem Transportelement aufliegt. Dabei kann der Boden vorzugsweise aus Metall gefertigt sein, während eine oben liegende Filtereinheit als ein Einwegelement ausgebildet sein kann. An der Unterseite des Bodens kann der Aufsatzstutzen des Filterelementes angebracht sein.

Eine bevorzugte Ausführungsform der Erfindung besteht darin, dass an der Lackierstation mindestens eine Lufteintrittsöffnung vorgesehen ist, durch welche Luft zuführbar ist. Es wird somit ständig Frischluft der Lackierstation zugeführt, so dass sich eine Strömung vom Werkstück weg zur Absaugstation hin einstellt. Hierdurch werden übermäßige Lackkonzentrationen in der Kabinenluft vermieden.

Besonders bevorzugt ist es nach einer Weiterbildung der Erfindung, dass die mindestens eine Lufteintrittsöffnung oberhalb des Werkstücks angeordnet ist, wobei Luft durch die Lufteintrittsöffnung auf das Werkstück zuleitbar ist. Bevorzugt sind mehrere Lufteintrittsöffnungen vorgesehen. Es kann so eine besonders gute Umströmung des Werkstücks, welches insbesondere eine Karosserie eines Fahrzeuges sein kann, erreicht. Vorzugsweise befindet sich das Werkstück dabei mittig in der Lackierstation, vorzugsweise unmittelbar vertikal oberhalb des freistehenden Filterelementes in dem darunterliegenden Absaugraum. Es kann auch eine Einströmung von Frischluft entlang den Wänden erfolgen, was einem Lackniederschlag entgegenwirkt.

Eine weitere gute Abführung der belasteten Luft aus der Lackierstation wird nach einer Weiterbildung der Erfindung dadurch erreicht, dass die obenliegende Lackierstation von der untenliegenden Absaugstation über einen luftdurchlässigen, vorzugsweise gitterartigen, Trennboden abgeteilt ist.

Es ist erfindungsgemäß, dass die Wechselvorrichtung einen Drehtisch aufweist, auf welchem mindestens zwei Filterelemente angeordnet sind und dass durch Drehen des Drehtisches ein erstes Filterelement von der Ansaugöffnung entfernbar und gleichzeitig ein zweites Filterelement zuführbar ist. Mit dem Drehtisch ist ein Revolvermechanismus vorgesehen, welcher ermöglicht, in einer Drehbewegung ein altes und verbrauchtes Filterelement von der Ansaugöffnung zu entfernen und gleichzeitig ein neues frisches Filterelement zuzufördern. Bei einem einfachen Drehtisch mit lediglich zwei Filterelementen umfasst die Wechselbewegung einen Drehwinkel von 180°. Das verbrauchte Filterelement wird dabei zu einer Lade-/Entladeposition befördert, während das frische Filterelement von dort unmittelbar auf die Ansaugöffnung gefördert wird. Bei einem karussellartigen Drehtisch mit mehr als zwei Filterelementen kann das verbrauchte Filterelement für einen oder mehrere Wechselzyklen noch in der Absaugstation verbleiben.

Nach einer weiteren Ausführungsvariante der Erfindung ist es vorteilhaft, dass mittels des Drehtisches das erste Filterelement, welches mit Overspray beladen ist, zu einer Ladeposition förderbar ist, und dass an der Ladeposition eine Ladeeinrichtung vorgesehen ist, mit welcher das erste Filterelement entladen und ein neues Filterelement auf den Drehtisch zugeführt wird. Der Drehtisch kann dabei das zuvor erwähnte Transportelement sein oder dieses umfassen. Neben dem Drehtisch ist eine separate Ladeeinrichtung, etwa ein Transport- und Hubwagen, vorgesehen. Grundsätzlich kann das verbrauchte Filterelement aber auch unmittelbar von einer Bedienperson an der Ladeposition entnommen und durch ein frisches Filterelement ersetzt werden.

Für ein effizientes Wechseln ist es vorteilhaft, dass drei, vier oder mehr Filterelemente auf dem Drehtisch lagerbar sind. Mit der Erhöhung der Anzahl der Filterelemente verringert sich der notwendige Drehwinkel zum Wechseln eines Filterelementes.

Grundsätzlich kann die Lackieranlage nur mit einer Wechseleinrichtung mit einem Drehtisch versehen sein. Um einen kontinuierlichen Lackierbetrieb zu ermöglichen ist es nach einer Weiterbildung der Erfindung vorteilhaft, dass zwei oder mehr Wechseleinrichtungen angeordnet sind. Dabei werden die Wechseleinrichtungen zeitlich versetzt zueinander betätigt, so dass stets ein Filterelement auf einer Ansaugöffnung positioniert und in Betrieb ist. Somit ist in der Lackieranlage stets in der Absaugstation ein Unterdruck gegeben, durch den Abluft mit Overspray in die Absaugstation eingesaugt wird.

Ein kontinuierlicher Betrieb der erfindungsgemäßen Lackieranlage wird nach einer Weiterbildung dadurch verbessert, dass zum Be- und Entladen der Wechseleinrichtung mit Filterelementen mindestens eine Schleuse mit einem Schleusenraum vorgesehen ist, welche einerseits über eine erste Schleusentür mit der Absaugstation und andererseits über eine zweite Schleusentür mit der Umgebung verbunden ist. Insbesondere kann ein Drehtisch der Wechseleinrichtung insgesamt in der mit Abluft beladenen Absaugstation sein. Vorzugsweise ist eine Ladeeinrichtung mit einem separaten Transportelement vorgesehen, welcher ein verbrauchtes Filterelement von dem Drehtisch entnimmt und durch die erste Schleusentür in den Schleusenraum verfährt. Nach dem Schließen der ersten Schleusentür zur Absaugstation kann die zweite Schleusentür zur Umgebung, insbesondere der Produktionshalle, geöffnet und das verbrauchte Filterelement abgeführt und entsorgt werden. Anschließend kann ein neues Filterelement auf die Ladeeinrichtung aufgebracht und die zweite Schleusentür wieder verschlossen werden. Abschließend kann dann die erste Schleusentür wieder geöffnet und das frische Filterelement auf den freien Platz auf dem Drehtisch der Wechseleinrichtung verbracht werden.

Diese Schleusenanordnung ist besonders umweltfreundlich, da keine oder kaum Abluft mit Overspray aus der Absaugstation in die Umgebung austreten kann. Auch wird ein notwendiger Unterdruck in der Absaugstation durch das Be- und Entladen nicht oder nicht wesentlich beeinflusst.

Unter Umweltgesichtspunkten ist es besonders vorteilhaft, dass die mindestens eine Lufteintrittsöffnung über einen Leitungskanal mit der Ansaugöffnung verbunden ist, wobei zumindest ein Teil der gefilterten Abluft in die Lackierstation rückführbar ist. Im Verlauf des Leitungskanals kann neben einer Pump- oder Lüftungseinrichtung ein Feuchtigkeitsabscheider vorgesehen sein. Weiterhin ist es vorteilhaft, über eine Steuereinheit Frischluft teilweise der rückgeführten Luft zuzuführen und gleichzeitig einen Teil der gefilterten Abluft nach außen abzuleiten.

Das Filterelement ist dadurch gekennzeichnet, dass das Filterelement einen Boden aufweist, in welchem etwa mittig die Austrittsöffnung ausgebildet ist und dass oberhalb des Bodens die Filterfläche einen Außenumfangsbereich des Filterelementes bildet und einen Filterinnenraum umschließt, der mit der Austrittsöffnung verbunden ist. Das Filterelement ist dabei insgesamt so ausgebildet, dass weitgehend über den gesamten Außenumfang eine Einströmung von Luft in das Filterelement ermöglicht wird. Hierdurch kann eine gleichmäßige Einströmung über den Außenumfangsbereich erzielt werden. Somit kann die Filterfläche insgesamt gleichmäßig genutzt werden. Dies erhöht die Standzeit des Filterelements.

Eine bevorzugte Ausführungsform besteht darin, dass der Boden aus Metall zum Aufnahmen und Halten einer lösbaren Filtereinheit gebildet ist und dass an der Unterseite des Boden eines hülsenförmiger Aufsatzstutzen vorgesehen ist, welcher zum lösbaren Aufsetzen auf eine Ansaugöffnung einer Lackieranlage ausgebildet ist. Der Boden aus Metall mit dem Aufsatzstutzen ist somit wiederverwendbar und kann die Basis für ein Grundgerüst für das Filterelement darstellen. Auf dem Boden können auch nach oben ragende Stützen oder Fixierelemente für die Filtereinheit vorgesehen sein.

Gemäß einer bevorzugten Weiterbildung ist es vorgesehen, dass zumindest die lösbare Filtereinheit als ein Einwegelement ausgebildet ist. Dies erspart ein aufwändiges Entfernen der zähen klebrigen Lackschicht, welche sich an der Filterfläche der Filtereinheit niedergeschlagen hat. Die Filtereinheit ist dabei insgesamt aus einem kostengünstigen zweckmäßigen Material aufgebaut.

Eine weitere bevorzugte Ausführungsvariante besteht darin, dass das Filterelement und/oder die Filtereinheit einen sich nach oben vom Boden weg verjüngenden Umfangsbereich aufweisen. Dies ermöglicht ein sehr gutes Ansaugen von belasteter Luft, welche großflächig von oben anströmt. Durch diese Formgebung wird Luft mit Overspray von den Wänden der Lackieranlage effizient abgeleitet, so dass deren Verschmutzung mit Lack reduziert ist.

Besonders zweckmäßige Formgebungen bestehen darin, dass das Filterelement und/oder die Filtereinheit die Form eines Kegels, eines Kegelstumpfes, einer Halbkugel, einer glatten oder gestuften Pyramide aufweist.

Eine besonders kosteneffiziente Ausführungsvariante wird dadurch erzielt, dass zum Bilden der Filterfläche Filterzellen vorgesehen sind, welche zumindest teilweise aus einem Karton- oder Papiermaterial gebildet sind. Die Filterzellen können dabei insgesamt aus Karton- oder Papiermaterial gebildet sein oder zusätzlich luftdurchlässige Vliesmaterialien aus Textilstoffen, gitterartigen Elementen oder sonstigen geeigneten Filterelementen umfassen. Die Filterzellen bilden dabei Teilbereiche der Filtereinheit. Die einzelnen Filterzellen können dabei auswechselbar sein.

Bei dem erfindungsgemäßen Verfahren zum Lackieren eines Werkstücks ist vorgesehen, dass das Filterelement in einem Mittenbereich der Ansaugstation angeordnet wird, dass das Filterelement mit einer nach unten gerichteten Austrittsöffnung auf eine nach oben gerichtete Ansaugöffnung aufgesetzt wird, dass die Abluft über die nach oben gerichtete Ansaugöffnung abgeführt wird, welche in einem unteren Bereich der Absaugstation angeordnet ist, und dass Luft mit Overspray über den gesamten seitlichen Umfang des Filterelementes angesaugt wird. Es wird das Filterelement mittels einer Wechseleinrichtung mit Transportwagen gewechselt, wobei das Filterelement auf die Ansaugöffnung aufgesetzt und wieder abgeführt wird. Mit dem erfindungsgemäßen Verfahren können die zuvor beschriebenen Vorteile erzielt werden. Insbesondere ist ein schneller und effizienter Wechsel des mindestens einen Filterelementes in einer Lackieranlage möglich.

Eine bevorzugte Verfahrensvariante der Erfindung besteht darin, dass das Transportelement einen Anschlag aufweist, mit welchem das Filterelement zentriert über der Ansaugöffnung positioniert und abgesenkt wird. Dies erlaubt insbesondere ein schnelles und positionsgenaues Einfahren des Transportelementes an die Ansaugöffnung. Das Transportelement kann ein Transportwagen sein, der von Hand oder mittels eines Motors in den Ansaugraum der Absaugstation eingefahren wird. Das Verfahren erfolgt vorzugsweise entlang von Schienen, welche vorzugsweise verdeckt, insbesondere C-förmig ausgebildet sind.

Ein Wechseln des Filterelementes wird noch dadurch verbessert, dass das Absenken mittels einer Hubeinrichtung des Transportelementes von einer oben liegenden Transportposition auf die Ansaugöffnung erfolgt. Die Hubeinrichtung kann dabei von Hand oder motorisch oder mittels Druckluft oder einem Hydraulikfluid betätigt werden. Zur Handbetätigung kann eine Kurbel oder ein Betätigungshebel ähnlich einem Wagenheber vorgesehen sein. Für ein motorisches Betätigen kann an dem Transportelement eine Batterie zum Antreiben eines entsprechenden Elektromotors oder ein Druckbehälter für Druckluft oder Hydraulikfluid vorgesehen sein, um entsprechende pneumatische oder hydraulische Stellzylinder zu betätigen.

Weiterhin ist es bevorzugt, dass das Filterelement von einer Filterposition an der Ansaugöffnung mittels einer Hubeinrichtung des Transportelementes in eine oben liegende Transportposition angehoben wird, in welcher das Transportelement aus der Absaugstation verfahren wird. Ein vertikales Aufsetzen des Filterelementes auf die Ansaugöffnung erleichtert ein Zentrieren und Halten des Filterelementes in der Filterposition. Eine zusätzliche Befestigung ist nicht zwingend erforderlich, wie etwa bei einer seitlichen Anbringung des Filterelementes. In umgekehrter Weise kann ein neues Filterelement von der Transportposition auf dem Transportelement abgesenkt und in die Filterposition an der Ansaugöffnung gebracht werden.

Ein positionsgenaues Wechseln des Filterelementes wird nach einer Weiterbildung des erfindungsgemäßen Verfahrens noch dadurch verbessert, dass das Transportelement der Wechselvorrichtung zumindest in der Ansaugstation im Bereich der Ansaugöffnung entlang von Schienen geführt verfahren wird. Die Schienen können ausschließlich in der Absaugstation im Bereich der Ansaugöffnung vorgesehen sein, oder auch nach außerhalb der Absaugstation führen.

Besonders bevorzugt ist es dabei, dass eine Lackieranlage verwendet wird, wie sie zuvor beschrieben wurde.

Die Erfindung wird nachfolgend anhand von Ausführungsbeispielen weiter beschrieben, welche schematisch in den Zeichnungen dargestellt sind. In den Zeichnungen zeigen:
- Fig. 1: eine schematische Querschnittsansicht durch eine Lackieranlage nach dem Stand der Technik;
- Fig. 2: eine perspektivische Ansicht einer Absaugstation einer bekannten Lackieranlage;
- Fig. 3: eine weitere perspektivische Ansicht der Lackieranlage von Fig. 2 beim Wechseln eines Filterelementes;
- Fig. 4: eine vergrößerte Detailansicht der Lackieranlage von Fig. 2 und Fig. 3 beim Ausfahren eines Filterelementes aus der Absaugstation;
- Fig. 5: eine perspektivische Ansicht der Lackieranlage der Figuren 2 bis 4 beim Einfahren eines neuen Filterelementes;
- Fig. 6: eine perspektivisches Ansicht eines Filterelementes von oben;
- Fig. 7: eine perspektivische Ansicht des Filterelementes von Fig. 6 von unten;
- Fig. 8: eine perspektivische Schnittdarstellung des Filterelementes der Figuren 6 und 7;
- Fig. 9: eine schematische Draufsicht auf eine Absaugstation einer erfindungsgemäßen Lackieranlage im Absaugbetrieb;
- Fig. 10: eine schematische Draufsicht auf die Lackieranlage von Fig. 9 bei einem Wechselvorgang;
- Fig. 11: eine schematische Ansicht der Lackieranlage von Fig. 9 und 10 beim Entladen eines verbrauchten Filterelementes;
- Fig. 12: eine perspektivische Ansicht einer Ladeeinrichtung für eine erfindungsgemäße Lackieranlage; und
- Fig. 13: eine perspektivische Ansicht der Ladeeinrichtung von Fig. 12 beim Entladen eines gebrauchten Filterelementes.

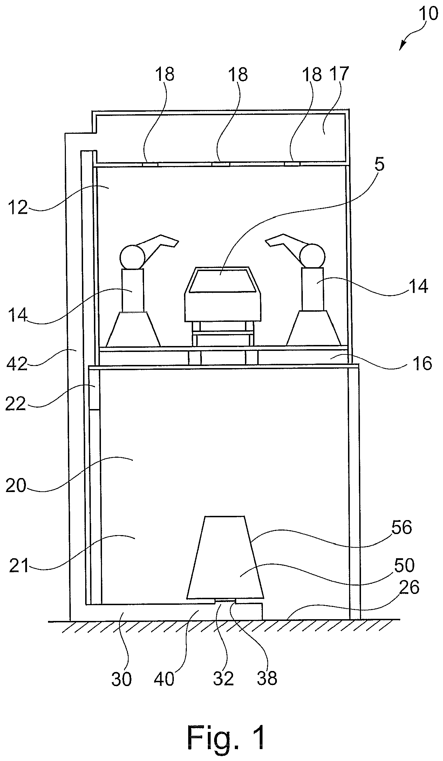

Eine bekannte Lackieranlage 10 gemäß Fig. 1 weist eine obenliegende Lackierstation 12 und eine darunterliegende Absaugstation 20 auf, welche über einen gitterartigen, luftdurchlässigen Trennboden 16 voneinander getrennt sind. In der Lackierstation 12 wird ein Werkstück 5 mittels einer oder mehrerer Lackiervorrichtungen 14 mit einer Lackbeschichtung versehen. Im dargestellten Ausführungsbeispiel ist das Werkstück 5 eine Karosserie eines Kraftfahrzeuges, welche mittels Lackierrobotern als Lackiervorrichtungen 14 lackiert wird. Über Lufteintrittsöffnungen 18 von einem Einströmkanal 17 im Deckenbereich der Lackierstation 12 wird beständig Frischluft zugeführt. Abluft mit feinen Lackpartikeln, auch Overspray genannt, wird durch den Trennboden 16 nach unten in die Absaugstation 20 abgeleitet.

Die Absaugstation 20 weist einen Absaugraum 21 auf, welcher von Seitenwänden 22 umgrenzt ist. In einem Mittenbereich des Absaugraumes 21 ist an einem Bodenbereich 26 eine Absaugeinrichtung 30 mit einem kegelstumpfförmigen Filterelement 50 angeordnet. Das Filterelement 50 ist, wie später noch näher erläutert wird, auf einen Zentrierstutzen 38 einer Ansaugöffnung 32 aufgesetzt. Zum Bilden der Absaugeinrichtung 30 ist die Ansaugöffnung 32 mit einem Leitungskanal 40 verbunden, welcher sich entlang des Bodenbereiches 26 nach außen erstreckt. Der Leitungskanal 40 führt über eine vertikale Zuführung 42 zu dem Einströmkanal 17 im Deckenbereich der Lackierstation 12. Hierdurch kann gefilterte Luft wieder in die Lackierstation 12 zurückgeführt werden. Die Strömung wird durch eine Pumpe beziehungsweise einen Lüfter erzeugt, der nicht dargestellt ist. Weiterhin können entlang der Zuführung 42 weitere Behandlungseinrichtungen vorgesehen sein, etwa eine Einrichtung zum Entfeuchten der Luft oder eine Einrichtung zum Aufwärmen oder Kühlen oder eine Einrichtung zum Einleiten von frischer Außenluft und/oder Ableiten von Prozessluft nach außen.

Durch die Absaugeinrichtung 30 mit dem mittig angeordneten Filterelement 50, welches entlang des gesamten Umfangs von den Seitenwänden 22 beabstandet ist, und zwar mit einem Abstand von vorzugsweise 1 bis 3 Metern, wird Luft mit Overspray mittig nach unten abgesaugt, so dass ein Niederschlag von Lackpartikeln an den Seitenwänden 22 reduziert oder weitgehend vermieden wird.

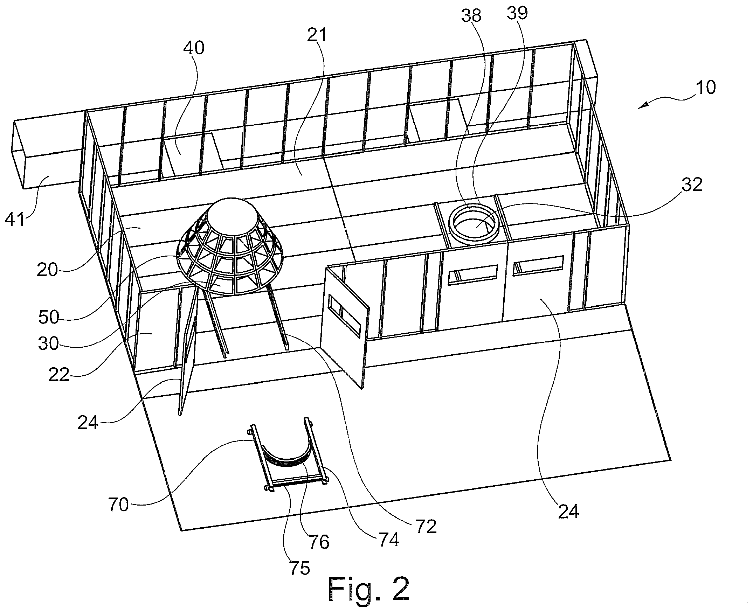

Die Lackpartikel der angesaugten Luft können sich an einer Filterfläche 56 des Filterelementes 50 absetzen. Dabei setzt sich das Filterelement 50 allmählich zu, so dass das Filterelement 50 in vorgegebenen Zeitabständen zu wechseln ist. Wie aus Fig. 2 zu sehen ist, ist die Lackieranlage 10 mit einer erfindungsgemäßen Wechselvorrichtung 70 versehen. Diese umfasst ein Transportelement 74, welcher ein Fahrgestell 75 mit Rädern aufweist. Zum positionsgenauen Aufnehmen oder Absetzen eines Filterelements 50 weist das Transportelement einen halbkreisförmigen Anschlag 76 auf, welcher korrespondierend zu einem hülsenförmigen Zentrierstutzen 38 mit ringförmigem Aufnahmeflansch 39 ausgebildet ist. Der Zentrierstutzen 38 ist an einer zweiten Ansaugöffnung 32 der Absaugeinrichtung 30 in dem Absaugraum 21 dargestellt, wobei in der Darstellung gemäß Fig. 2 auf diese zweite Ansaugöffnung 32 noch kein Filterelement 50 aufgesetzt ist. Die Ansaugöffnungen 32 sind jeweils über horizontal verlaufende Leitungskanäle 40 mit einem querverlaufenden Sammelkanal 41 verbunden, um eine Luftrückführung der gefilterten Luft durchzuführen.

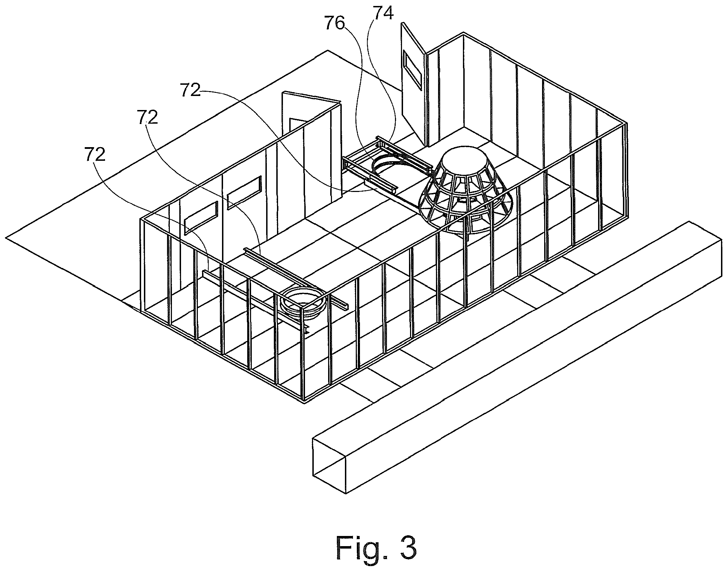

Zum Wechseln werden die zweiflügligen Tore 24, welche in den Seitenwänden 20 vorgesehen sind, geöffnet. Sodann kann gemäß Fig. 3 das Transportelement 74 in den Absaugraum 21 entlang von zwei parallel angeordneten, C-förmigen Schienen 72 eingefahren werden, wie anschaulich in Fig. 3 dargestellt ist. Das Einschieben kann von Hand oder automatisiert erfolgen. Die Schienen 72 können auch noch außerhalb der Absaugstation 20 weitergeführt sein. Das Transportelement 74 wird zu dem Filterelement 50 eingefahren, bis der halbringförmige Anschlag 76 an dem Zentrierstutzen 38 anliegt. Anschließend kann ein oberes Aufnahmeteil 80 des Fahrgestells 75 des Transportelements 74 mittels einer Hubeinrichtung 78 angehoben werden. Der Aufnahmeteil 80 des Fahrgestells 75 ist dabei über vertikale Teleskopstreben 79 mit dem unteren Fahrgestell 75 höhenverstellbar verbunden. Die Hubeinrichtung 78 kann mit einem Kniehebelmechanismus ähnlich einem Wagenheber ausgebildet sein. Die Hubeinrichtung 78 kann von Hand oder pneumatisch oder hydraulisch mit Stellzylindern betätigt werden.

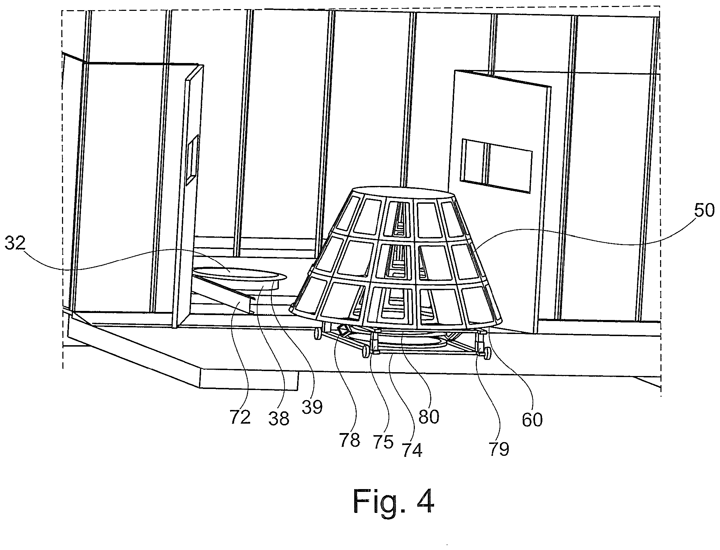

Mittels der Hubeinrichtung 78 gelangt der Aufnahmeteil 80 des Fahrgestells 75 mit einem plattenförmigen Boden 60 des Filterelementes 50 in Kontakt, wobei das Filterelement 50 insgesamt von einem Aufnahmeflansch 39 am Zentrierstutzen 38 der Ansaugöffnung 32 abgehoben wird. In dieser angehobenen Transportposition kann nun das Filterelement 50 mit dem Transportelement 74 nach außen ausgeschoben werden, wie anschaulich in Fig. 4 dargestellt ist. Dies kann motorisch oder von Hand erfolgen.

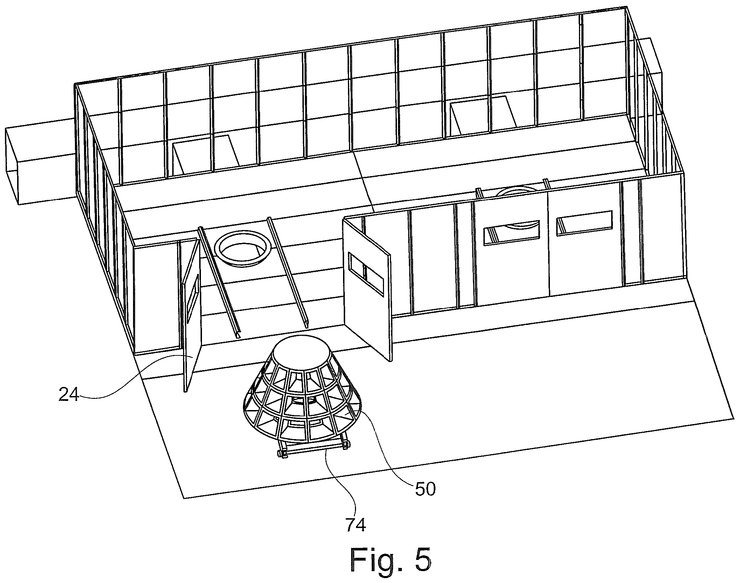

Mit dem Transportelement 74 kann das verbrauchte Filterelement 50 zur Entsorgung abgefahren werden. Gleichzeitig kann ein neues Filterelement 50 über dasselbe oder ein anderes Transportelement 74 in die Absaugstation 20 eingeschoben werden, wie anschaulich in Fig. 5 dargestellt ist. Durch den halbkreisförmigen Anschlag 76 am Transportelement 74 kann das neue Filterelement 50 am Transportelement 74 zentriert und beim Einschieben auch zentriert zu der Absaugöffnung 32 angeordnet und aufgesetzt werden. Abschließend kann das Tor 24 wieder geschlossen werden, so dass der Betrieb der Lackieranlage 10 fortgesetzt werden kann. Es wird so ein schneller, unkomplizierter Wechsel des Filterelementes 50 ermöglicht.

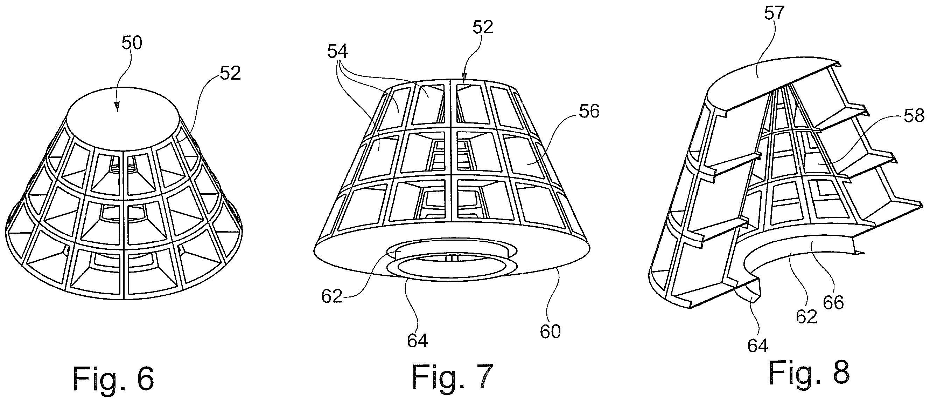

Der Aufbau eines erfindungsgemäßen Filterelementes 50 ist anschaulich in den Figuren 6 bis 8 verdeutlich. Das Filterelement 50 weist einen metallischen, ringscheibenförmigen Boden 60 auf, an dessen Unterseite ein hülsenförmiger Aufsatzstutzen 62 angeordnet ist. An dessen unterem Rand ist ein ringscheibenförmiger Dichtkragen 64 angeordnet, welcher leicht konisch, nach oben verjüngt, ausgebildet ist. Der konische Dichtkragen 64 korrespondiert mit einem entsprechend konisch ausgebildeten Aufnahmeflansch 39 am Zentrierstutzen 38 der Lackieranlage 10, so dass eine Zentrierung des Filterelementes 50 auf dem Zentrierstutzen 38 erleichtert ist.

Auf dem metallischen Boden 60 ist eine kegelstumpfförmige Filtereinheit 52 angeordnet, welche als ein Einwegelement ausgebildet ist. Die Filtereinheit 52 ist aus einzelnen kassettenartigen Filterzellen 54 aufgebaut, deren Grundrahmen vorzugsweise aus Karton gebildet ist. Innerhalb der Filterzellen 52 ist zum Bilden der Filterfläche 56 ein geeignetes Filtermaterial, etwa Papier, ein Textil etc. oder eine Kombination verschiedener Materialien angeordnet. Durch den konischen Außenumfangsbereich des Filterelements 50 wird Luft sowohl von oben als auch von der Seite angesaugt, so dass Luft mit Lackoverspray besonders gut angesaugt und damit entfernt von den umgebenden Seitenwänden 22 einer Absaugstation 20 gehalten werden kann.

Die Filterzellen 52 umgeben einen kegelartigen Filterinnenraum 58, von welchem die gefilterte Luft nach unten über die Austrittsöffnung 66 durch die Absaugeinrichtung 30 abgeführt werden kann. Eine Oberseite des kegelstumpfförmigen Filterelementes 50 ist mit einer Abdeckplatte 57 versehen, welche vorzugsweise aus Karton gebildet sein kann.

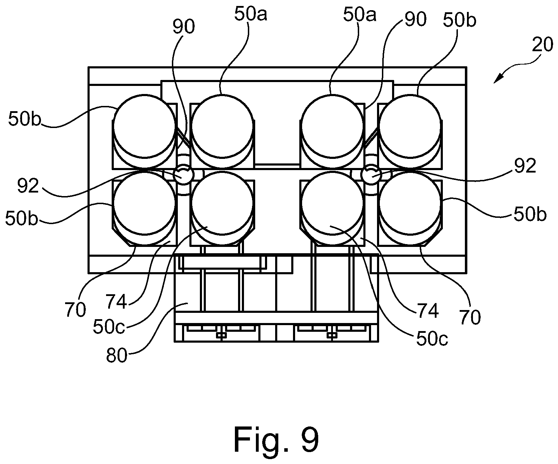

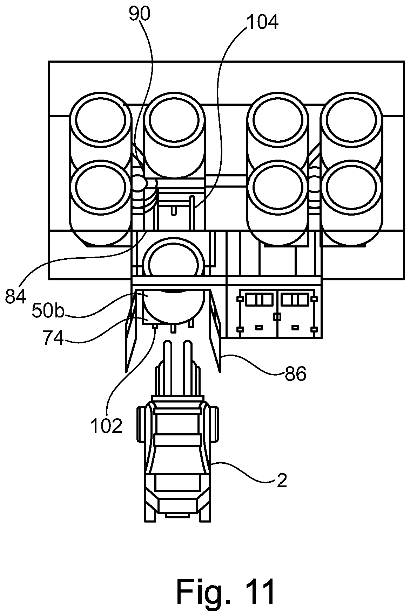

Eine alternative Ausgestaltung einer Absaugstation 20 für eine erfindungsgemäße Lackieranlage ist in den Figuren 9 bis 11 dargestellt. In dem etwa rechteckigen Raum der Absaugstation 20 sind zwei Wechselvorrichtungen 70 mit jeweils einem Drehtisch 90 angeordnet. Auf dem Drehtisch 90 sind insgesamt jeweils vier Filterelemente 50 auf einem plattenartigen oder palettenartigen Transportelement 74 angeordnet. Dabei befindet sich ein Filterelement 50a im Betriebseinsatz auf der Ansaugöffnung 32 im Boden der Absaugstation 20. Jeweils ein frisches Filterelement 50c, welches hell dargestellt ist, befindet sich unmittelbar vor einer kammerartigen Schleuse 80 in einer Stand-by-Position. Aus dieser Stand-by-Position kann das frische Filterelement 50c durch eine Drehbewegung um 90° über die Absaugöffnung 32 bewegt werden. Gleichzeitig wird dabei das verbrauchte Filterelement 50a um 90° verschwenkt und abgefördert.

Bei der linksseitigen Wechselvorrichtung 70 ist eine Drehbewegung entgegen dem Uhrzeigersinn und bei der rechtsseitigen Wechselvorrichtung 70 ist eine Wechselbewegung im Uhrzeigersinn vorgesehen. Unmittelbar angrenzend an das frische Stand-by-Filterelement 50c ist je eine erste Schleusentür 84 einer Schleuse 80 angeordnet. Durch Öffnen der ersten Schleusentür 84 kann ein frisches Filterelement 50c dem Drehtisch 90 aus einem Schleusenraum 82 zugeführt werden. Zur äußeren Umgebung weist die Schleuse 80 zwei zweite Schleusentüren 86 auf, jeweils eine zweite Schleusentür 86 für jede Wechselvorrichtung 70.

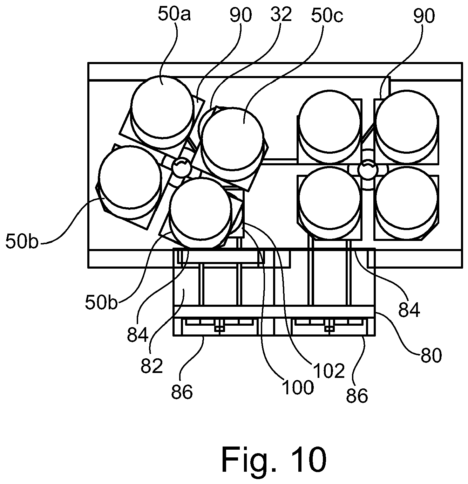

Gemäß der Darstellung von Fig. 10 wird ein frisches Filterelement 50c aus der Stand-by-Position vor der ersten Schleusentür 84 auf die nur teilweise erkennbare Ansaugöffnung 32 im Boden der Absaugstation 20 durch eine Drehung um 90° zugefördert. Dabei wird das alte Filterelement 50a von der Ansaugöffnung 32 in eine Zwischenposition bewegt. Gleichzeitig wird ein anderes verbrauchtes Filterelement 50b zum Abführen aus der Absaugstation 20 unmittelbar vor die erste Schleusentür 84 auf eine schematisch angedeutete Ladeeinrichtung 100 mit einem Ladewagen 102 bewegt.

Sodann kann sich die erste Schleusentür 84 bei geschlossenen zweiten Schleusentüren 86 öffnen. Über die Ladeeinrichtung 100 mit dem verfahrbaren Ladewagen 102 kann das verbrauchte Filterelement 50b, welches auf dem palettenartigen Transportelement 74 angeordnet ist, entlang einer Transportbahn 104 mit Schienen von dem Drehtisch 90 weg in den Schleusenraum 82 gefahren werden. Sodann schließt die erste Schleusentür 84, und es kann sich darauf die zweite Schleusentür 86 nach außen hin öffnen. Abschließend kann mittels eines Transportfahrzeugs 2 das verbrauchte Filterelement 74 aus dem Schleusenraum 82 entfernt und entsorgt werden.

Danach kann mit dem Transportfahrzeug 2 ein frisches Filterelement 50 durch die offene zweite Schleusentür 86 auf das palettenartige Transportelement 74 auf der Ladeeinrichtung 100 aufgesetzt werden. Nach Schließen der zweiten Schleusentür 86 und Öffnen der ersten Schleusentür 84 kann durch eine lineare Förderbewegung der Ladeeinrichtung 100 das frische Filterelement 50c auf den freien Platz am Drehtisch 90 abgesetzt werden.

Die Anordnung der Wechselvorrichtung 70 mit insgesamt vier Lagerplätzen für Filterelemente 50 hat den Vorteil, dass ein verbrauchtes Filterelement 50b für zwei Wechselzyklen noch in der Absaugstation 20 verbleibt. Hierdurch kann der Lack an den Einwegfilterelementen 50 antrocknen, so dass diese anschließend ohne die Gefahr von abtropfendem Lack durch die Schleuse 80 entsorgt werden können.

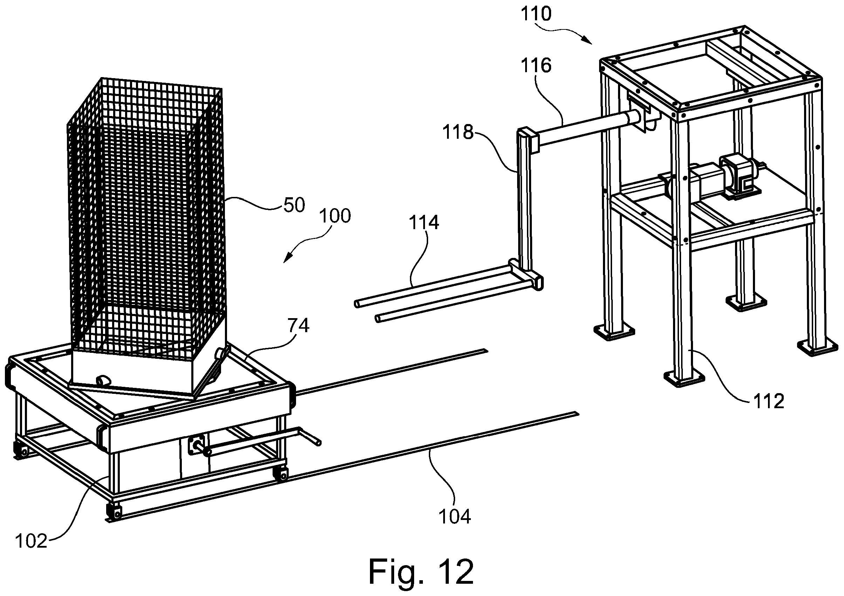

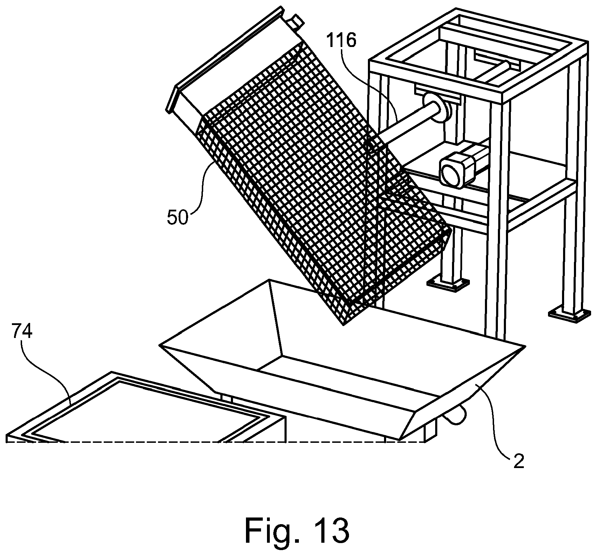

Eine alternative Anordnung zum Entladen eines verbrauchten Filterelementes 50 ist schematisch in den Figuren 12 und 13 gezeigt. Die Ladeeinrichtung 100 weist einen gestellartigen Ladewagen 102 auf. Auf dem Ladewagen 102 ist das palettenartige Transportelement 74 angeordnet, auf welchem das verbrauchte Filterelement 50 aufliegt. Der Transportwagen 102 wird entlang von zwei Schienen einer Transportbahn 104 zu einer Entladeeinrichtung 110 verfahren.

Die Entladeeinrichtung 110 weist ein kastenartiges Grundgestell 112 auf, an dem ein Schwenkarm 116 mit einem Hubarm 118 und einem Greifelement 114 in Richtung der Ladebahn 104 vorragt.

Nach Erreichen einer Entladeposition des Ladewagens 102 wird das verbrauchte Filterelement 50 mit dem Greifelement 114 ergriffen und über einen Hubarm 118 angehoben. Nach dem Entfernen des Ladewagens 102 kann unterhalb des Filterelementes 50 ein Transportfahrzeug 2 mit einer Ladefläche angeordnet werden. Durch ein Verschwenken des Greifelementes 114 mit dem Schwenkarm 116 kann das Filterelement 50 in die Aufnahme des Transportfahrzeuges 2 gekippt werden. Mit dem Transportfahrzeug 2 kann dann das verbrauchte Filterelement 50 zur Entsorgung verfahren werden.

## Patentansprüche

1. Lackieranlage zum Lackieren eines Werkstücks (5) mit
- einer Lackierstation (12), in welcher mittels mindestens einer Lackiervorrichtung (14) eine Beschichtung auf das Werkstück (5) aufsprühbar ist, und
- einer Absaugstation (20), welche unterhalb der Lackierstation (12) angeordnet ist und eine Absaugeinrichtung (30) mit mindestens einem Filterelement (50) aufweist, über welche Luft mit Overspray aus der Lackierstation (12) ansaugbar ist, wobei Overspray aus der angesaugten Luft an dem mindestens einen Filterelement (50) abgeschieden wird,
wobei
- in einem unteren Bereich der Absaugstation (20) eine nach oben gerichtete Ansaugöffnung (32) zum Abführen von Abluft angeordnet ist,
- das Filterelement (50) eine nach unten gerichtete Austrittsöffnung (66) aufweist, welche auf die Ansaugöffnung (32) aufgesetzt ist,
- das mindestens eine Filterelement (50) in einem Mittenbereich der Absaugstation (20) angeordnet ist, wobei Abluft mit Overspray über den Umfang des Filterelementes (50) ansaugbar ist, und
- eine Wechselvorrichtung (70) mit mindestens einem Transportelement (74) vorgesehen ist, mit welchem das Filterelement (50) auf der Ansaugöffnung (32) absetzbar und wieder abführbar ist
**dadurch gekennzeichnet,**
- **dass** die Wechselvorrichtung (70) einen Drehtisch (90) aufweist, auf welchem mindestens zwei Filterelemente (50) angeordnet sind, und
- **dass** durch Drehen des Drehtisches (90) ein erstes Filterelement (50) von der Ansaugöffnung (32) entfernbar und gleichzeitig ein zweites Filterelement (50) zuführbar ist.

2. Lackieranlage nach Anspruch 1,
**dadurch gekennzeichnet,**
**dass** das Transportelement (74) eine Hubeinrichtung (78) aufweist, mittels welcher das Filterelement (50) vertikal auf die Ansaugöffnung (32) absenkbar und aufsetzbar sowie von der Ansaugöffnung (32) anhebbar ist.

3. Lackieranlage nach Anspruch 2,
**dadurch gekennzeichnet,**
**dass** das Filterelement (50) von einer Filterposition an der Ansaugöffnung (32) mittels der Hubeinrichtung (78) des Transportelementes (74) in eine oben liegende Transportposition anhebbar und abführbar ist.

4. Lackieranlage nach einem der Ansprüche 1 bis 3,
**dadurch gekennzeichnet,**
**dass** an der Ansaugöffnung (32) ein Zentrierstutzen (38) vorgesehen ist, auf welchen ein nach unten gerichteter Aufsatzstutzen (62) an dem Filterelement (50) aufsetzbar ist.

5. Lackieranlage nach einem der Ansprüche 1 bis 4,
**dadurch gekennzeichnet,**
**dass** das Filterelement (50) einen Boden (60) aufweist, welcher beim Transportieren des Filterelements (50) auf dem Transportelement (74) aufliegt.

6. Lackieranlage nach einem der Ansprüche 1 bis 5,
**dadurch gekennzeichnet,**
- **dass** mittels des Drehtisches (90) das erste Filterelement (50), welches mit Overspray beladen ist, zu einer Ladeposition förderbar ist, und
- **dass** an der Ladeposition eine Ladeeinrichtung (100) vorgesehen ist, mit welcher das erste Filterelement (50) entladen und ein neues Filterelement auf den Drehtisch (90) zugeführt wird.

7. Lackieranlage nach einem der Ansprüche 1 bis 6,
**dadurch gekennzeichnet,**
**dass** drei, vier oder mehr Filterelemente (50) auf dem Drehtisch (90) lagerbar sind.

8. Lackieranlage nach einem der Ansprüche 1 bis 7,
**dadurch gekennzeichnet,**
**dass** zwei oder mehr Wechseleinrichtungen angeordnet sind.

9. Lackieranlage nach einem der Ansprüche 1 bis 8,
**dadurch gekennzeichnet,**
**dass** zum Be- und Entladen der Wechseleinrichtung (70) mit Filterelementen (50) mindestens eine Schleuse (80) mit einem Schleusenraum (82) vorgesehen ist, welcher einerseits über eine erste Schleusentür (84) mit der Absaugstation (20) und andererseits über eine zweite Schleusentür (86) mit einer Umgebung verbunden ist.

10. Verfahren zum Lackieren eines Werkstücks (5), insbesondere mit einer Lackieranlage nach einem der Ansprüche 1 bis 9, wobei
- in einer Lackierstation (12) mittels mindestens einer Lackiervorrichtung (14) eine Beschichtung auf das Werkstück (5) aufgesprüht wird und
- in einer Absaugstation (20), welche unterhalb der Lackierstation (12) angeordnet ist, über eine Absaugeinrichtung (30) mit mindestens einem Filterelement (50) Luft mit Overspray aus der Lackierstation (12) angesaugt wird, wobei Overspray aus der angesaugten Luft an dem mindestens einen Filterelement (50) abgeschieden wird,
wobei
- das Filterelement (50) in einem Mittenbereich der Ansaugstation (20) angeordnet wird,
- das Filterelement (50) mit einer nach unter gerichteten Austrittsöffnung (66) auf eine nach oben gerichtete Ansaugöffnung (32) aufgesetzt wird,
- die Abluft über die nach oben gerichtete Ansaugöffnung (32) abgeführt wird,
- Luft mit Overspray über den gesamten seitlichen Umfang des Filterelementes (50) angesaugt wird,
**dadurch gekennzeichnet,**
- **dass** das Filterelement (50) mittels einer Wechseleinrichtung (70) mit Transportelement (74) gewechselt wird, wobei das Filterelement (50) auf die Ansaugöffnung (32) aufgesetzt und wieder abgeführt wird, wobei die Wechselvorrichtung (70) einen Drehtisch (90) aufweist, mit welchem ein erstes Filterelement (50) von der Ansaugöffnung (20) abgeführt und gleichzeitig ein zweites Filterelement (50) zugeführt wird.

11. Verfahren nach Anspruch 10,
**dadurch gekennzeichnet,**
**dass** das Filterelement (50) von einer Filterposition an der Ansaugöffnung (32) mittels einer Hubeinrichtung (78) des Transportelementes (74) in eine oben liegende Transportposition angehoben wird.

## Claims

1. A painting installation for painting a workpiece (5) comprising
- a painting station (12), in which a coating can be sprayed onto the workpiece (5) by means of at least one painting device (14), and
- an extraction station (20), which is arranged beneath the painting station (12) and has an extraction device (30) with at least one filter element (50), via which air containing overspray can be suctioned from the painting station (12), wherein overspray from the suctioned air is deposited on the at least one filter element (50),
wherein
- an upwardly directed suction opening (32) for discharging exhaust air is arranged in a lower region of the extraction station (20),
- the filter element (50) has a downwardly directed outlet opening (66), which is fitted onto the suction opening (32),
- the at least one filter element (50) is arranged in a centre region of the extraction station (20), wherein exhaust air containing overspray can be suctioned over the periphery of the filter element (50), and
- a changing device (70) with at least one transport element (74) is provided, by means of which the filter element (50) can be placed on the suction opening (32) and can be discharged again,
**characterised in that**
- the changing device (70) has a rotary table (90), on which there are arranged at least two filter elements (50), and
- **in that**, by rotating the rotary table (90), a first filter element (50) can be removed from the suction opening (32) and at the same time a second filter element (50) can be supplied.

2. The painting installation according to claim 1,
**characterised in that**
the transport element (74) has a lifting device (78), by means of which the filter element (50) can be lowered vertically towards and fitted on the suction opening (32) and can be raised from the suction opening (32).

3. The painting installation according to claim 2,
**characterised in that**
the filter element (50) can be raised from a filter position at the suction opening (32) by means of the lifting device (78) of the transport element (74) and can be discharged into a transport position lying above.

4. The painting installation according to one of claims 1 to 3,
**characterised in that**
a centring connection piece (38) is provided at the suction opening (32) on which centring connection piece a downwardly directed attachment connection piece (62) can be fitted on the filter element (50).

5. The painting installation according to one of claims 1 to 4,
**characterised in that**
the filter element (50) has a base (60), which rests on the transport element (74) as the filter element (50) is being transported.

6. The painting installation according to one of claims 1 to 5,
**characterised in that**
- the first filter element (50), which is loaded with overspray, can be conveyed by means of the rotary table (90) to a loading position, and
- **in that** a loading device (100) is provided in a loading position, by means of which the first filter element (50) is unloaded and a new filter element is supplied onto the rotary table (90).

7. The painting installation according to one of claims 1 to 6,
**characterised in that**
three, four or more filter elements (50) can be stored on the rotary table (90).

8. The painting installation according to one of claims 1 to 7,
**characterised in that**
two or more changing devices are arranged.

9. The painting installation according to one of claims 1 to 8,
**characterised in that**
at least one airlock (80) with an airlock chamber (82) is provided for loading and unloading the changing device (70) with filter elements (50) which airlock chamber (82) is connected on one side via a first airlock door (84) to the extraction station (20) and on the other side via a second airlock door (86) to a surrounding environment.

10. A method for painting a workpiece (5), in particular comprising a painting installation according to one of claims 1 to 9, wherein
- in a painting station (12) a coating is sprayed onto the workpiece (5) by means of at least one painting device (14) and
- in an extraction station (20), which is arranged beneath the painting station (12), air containing overspray is suctioned from the painting station (12) via an extraction device (30) with at least one filter element (50), wherein overspray from the suctioned air is deposited on the at least one filter element (50),
wherein
- the filter element (50) is arranged in a centre region of the extraction station (20),
- the filter element (50) having a downwardly directed outlet opening (66) is fitted onto an upwardly directed suction opening (32),
- the exhaust air is discharged via the upwardly directed suction opening (32),
- air containing overspray is suctioned over the entire lateral periphery of the filter element (50),
**characterised in that**
- the filter element (50) is changed by means of a changing device (70) with transport element (74), wherein the filter element (50) is fitted onto the suction opening (32) and discharged again, wherein the changing device (70) has a rotary table (90), by means of which a first filter element (50) is discharged from the suction opening (20) and at the same time a second filter element (50) is supplied.

11. The method according to claim 10,
**characterised in that**
the filter element (50) is raised from a filter position at the suction opening (32) by means of a lifting device (78) of the transport element (74) into a transport position lying above.

## Revendications

1. Installation de peinture pour peindre une pièce (5) comportant
- un poste de peinture (12), dans lequel un revêtement peut être appliqué par pulvérisation sur la pièce (5) au moyen d'au moins un dispositif de peinture (14), et
- un poste d'évacuation par aspiration (20), lequel est disposé sous le poste de peinture (12) et présente un système d'évacuation par aspiration (30) avec au moins un élément filtrant (50), par lequel de l'air avec un excédent de peinture pulvérisée peut être aspiré hors du poste de peinture (12), l'excédent de peinture pulvérisée étant éliminé de l'air aspiré sur l'au moins un élément filtrant (50),
dans laquelle
- une ouverture d'aspiration (32) dirigée vers le haut pour évacuer de l'air vicié est disposée dans une zone inférieure du poste d'évacuation par aspiration (20),
- l'élément filtrant (50) présente une ouverture de sortie (66) dirigée vers le bas, laquelle est placée sur l'ouverture d'aspiration (32),
- l'au moins un élément filtrant (50) est disposé dans une zone centrale du poste d'évacuation par aspiration (20), de l'air vicié avec un excédent de peinture pulvérisée pouvant être aspiré sur la périphérie de l'élément filtrant (50), et
- un dispositif de remplacement (70) est prévu avec au moins un élément de transport (74), avec lequel l'élément filtrant (50) peut être déposé sur l'ouverture d'aspiration (32) et peut en être retiré,
**caractérisée en ce que**
- le dispositif de remplacement (70) présente un plateau tournant (90), sur lequel au moins deux éléments filtrants (50) sont disposés, et
- **en ce qu'**un premier élément filtrant (50) peut être enlevé de l'ouverture d'aspiration (32) et un deuxième élément filtrant (50) peut être amené simultanément par la rotation du plateau tournant (90).

2. Installation de peinture selon la revendication 1,
**caractérisée en ce que**
l'élément de transport (74) présente un système de levage (78), au moyen duquel l'élément filtrant (50) peut être abaissé et placé verticalement sur l'ouverture d'aspiration (32) et peut être soulevé également de l'ouverture d'aspiration (32).

3. Installation de peinture selon la revendication 2,
**caractérisée en ce que**
l'élément filtrant (50) peut être soulevé et évacué depuis une position filtrante sur l'ouverture d'aspiration (32) au moyen du système de levage (78) de l'élément de transport (74) dans une position de transport située en haut.

4. Installation de peinture selon l'une quelconque des revendications 1 à 3,
**caractérisée en ce que**
une tubulure de centrage (38) est prévue sur l'ouverture d'aspiration (32), tubulure sur laquelle une tubulure d'embout (62) dirigée vers le bas peut être placée sur l'élément filtrant (50).

5. Installation de peinture selon l'une quelconque des revendications 1 à 4,
**caractérisée en ce que**
l'élément filtrant (50) présente un fond (60), lequel repose sur l'élément de transport (74) lors du transport de l'élément filtrant (50).

6. Installation de peinture selon l'une quelconque des revendications 1 à 5,
**caractérisée en ce que**
- le premier élément filtrant (50), lequel est chargé en excédent de peinture pulvérisée, peut être acheminé vers une position de chargement au moyen du plateau tournant (90), et
- **en ce qu'**est prévu, sur la position de chargement, un système de chargement (100), avec lequel le premier élément filtrant (50) est déchargé et un nouvel élément filtrant est apporté sur le plateau tournant (90).

7. Installation de peinture selon l'une quelconque des revendications 1 à 6,
**caractérisée en ce que**
trois, quatre éléments filtrants (50) ou plus peuvent être montés sur le plateau tournant (90).

8. Installation de peinture selon l'une quelconque des revendications 1 à 7,
**caractérisée en ce que**
deux systèmes de remplacement ou plus sont disposés.

9. Installation de peinture selon l'une quelconque des revendications 1 à 8,
**caractérisée en ce que**
pour charger et décharger le système de remplacement (70) en éléments filtrants (50), au moins un sas (80) avec un espace de sas (82) est prévu, lequel est relié d'une part par l'intermédiaire d'une première porte de sas (84) au poste d'évacuation par aspiration (20) et d'autre part par l'intermédiaire d'une deuxième porte de sas (86) à un environnement.

10. Procédé pour peindre une pièce (5), en particulier avec une installation de peinture selon l'une quelconque des revendications 1 à 9, dans lequel
- un revêtement est appliqué par pulvérisation sur la pièce (5) dans un poste de peinture (12) au moyen d'au moins un dispositif de peinture (14), et
- de l'air avec un excédent de peinture pulvérisée est aspiré depuis le poste de peinture (12) par l'intermédiaire d'un système d'évacuation par aspiration (30) avec au moins un élément filtrant (50) dans un poste d'évacuation par aspiration (20), lequel est disposé sous le poste de peinture (12), de l'excédent de peinture pulvérisée étant éliminé de l'air aspiré sur l'au moins un élément filtrant (50),
dans lequel
- l'élément filtrant (50) est disposé dans une zone centrale du poste d'aspiration (20),
- l'élément filtrant (50) avec une ouverture de sortie (66) dirigée vers le bas est placé sur une ouverture d'aspiration (32) dirigée vers le haut,
- l'air vicié est évacué par l'intermédiaire de l'ouverture d'aspiration (32) dirigée vers le haut,
- de l'air avec un excédent de peinture pulvérisée est aspiré sur la totalité de la périphérie latérale de l'élément filtrant (50),
**caractérisé en ce que**
- l'élément filtrant (50) est remplacé au moyen d'un système de remplacement (70) avec un élément de transport (74), dans lequel l'élément filtrant (50) est placé sur l'ouverture d'aspiration (32) et est à nouveau évacué, dans lequel le dispositif de remplacement (70) présente un plateau tournant (90), avec lequel un premier élément filtrant (50) est évacué de l'ouverture d'aspiration (20) et un deuxième élément filtrant (50) est amené simultanément.

11. Procédé selon la revendication 10,
**caractérisé en ce que**
l'élément filtrant (50) est soulevé depuis une position filtrante sur l'ouverture d'aspiration (32) au moyen d'un système de levage (78) de l'élément de transport (74) dans une position de transport située en haut.
